# EUROPEAN PATENT APPLICATION

(11) **EP 4 686 188 A1**
(43) Date of publication of application: **28.01.2026**
(21) Application number: 24223484.7
(22) Date of filing: 27.12.2024
(51) Int. Cl.: H04N 1/32, G06F 3/12

(54) **INFORMATION PROCESSING SYSTEM, PROGRAM, AND INFORMATION PROCESSING METHOD**

(30) Priority: 25.07.2024 JP 2024120255
(71) Applicant: FUJIFILM Business Innovation Corp., Minato-ku Tokyo (JP)
(72) Inventor: SATO, Mitsuru, Yokohama-shi, Kanagawa (JP)
(74) Representative: Kurig, Thomas

(57) **Abstract**

An information processing system includes a processor configured to: set, in a case where instruction information for providing an instruction to set an output destination of received data to any one of printing using a printing apparatus or upload to an external device is registered in the external device, the output destination of the data received from an outside according to the instruction provided by the instruction information.

## Description

### BACKGROUND OF THE INVENTION

### (i) Field of the Invention

The present disclosure relates to an information processing system, a program, and an information processing method.

### (ii) Description of Related Art

JP2009-060211A discloses a facsimile apparatus in which it is possible to easily perform changing, addition, or the like of a reception notification destination and a reception image data transfer destination even after returning home or going out, and security is also ensured.

### SUMMARY OF THE INVENTION

In an information processing system such as an image forming apparatus, a configuration is proposed in which it is possible to choose whether to print data received from an outside or upload the data to the cloud according to a setting set by a user.

With the configuration as above, in a case where the received data is set to be uploaded to the cloud, for example, in a case where a fax is received in an image forming apparatus installed in a company, the user can check the content of the fax from an outside of the company via the cloud.

However, in a case where the user goes out in a state where the received data is set to be printed, the user cannot check the content of the fax from the outside of the company via the cloud. There is a problem in security in that access from the outside of the company to the image forming apparatus installed in the company is received and the setting of the image forming apparatus can be remotely changed from the outside of the company.

An object of the present disclosure is to provide an information processing system, a program, and an information processing method with which it is possible to remotely change an output destination of received data.

According to a first aspect of the present disclosure, there is provided an information processing system including: a processor configured to: set, in a case where instruction information for providing an instruction to set an output destination of received data to any one of printing using a printing apparatus or upload to an external device is registered in the external device, the output destination of the data received from an outside according to the instruction provided by the instruction information.

According to a second aspect of the present disclosure, in the information processing system according to the first aspect, the processor may be configured to: check whether or not the instruction information is registered in the external device before outputting the data in a case where the data is received; and output the data to the output destination indicated by the instruction information in a case where the instruction information is registered in the external device.

According to a third aspect of the present disclosure, in the information processing system according to the second aspect, the processor may be configured to: check whether or not the instruction information is registered in the external device before outputting the data in a case where the data is received; and output the data to an output destination set in advance in a case where the instruction information is not registered in the external device.

According to a fourth aspect of the present disclosure, in the information processing system according to any one of the first to third aspects, the external device may be a cloud server.

According to a fifth aspect of the present disclosure, in the information processing system according to the fourth aspect, the instruction information may be uploaded to the cloud server as information in a file format.

According to a sixth aspect of the present disclosure, there is provided a program that causes a computer to execute a step of: setting, in a case where instruction information for providing an instruction to set an output destination of received data to any one of printing using a printing apparatus or upload to an external device is registered in the external device, the output destination of the data received from an outside according to the instruction provided by the instruction information.

According to a seventh aspect of the present disclosure, there is provided an information processing method including: setting, in a case where instruction information for providing an instruction to set an output destination of received data to any one of printing using a printing apparatus or upload to an external device is registered in the external device, the output destination of the data received from an outside according to the instruction provided by the instruction information.

With the information processing system according to the first aspect, it is possible to remotely change the output destination of the received data.

With the information processing system according to the second aspect, it is possible to reflect the user's desired output destination immediately before the output, on the output destination of the data.

With the information processing system according to the third aspect, it is possible to output the data even in a case where there is no instruction regarding the output destination of the data from the user immediately before the output of the data.

With the information processing system according to the fourth aspect, it is possible to remotely change the output destination of the received data using the cloud server.

With the information processing system according to the fifth aspect, it is possible to remotely change the output destination of the data by uploading a file to the cloud server.

With the program according to sixth aspect, it is possible to remotely change the output destination of the received data.

With the information processing method according to the seventh aspect, it is possible to remotely change the output destination of the received data.

### BRIEF DESCRIPTION OF THE DRAWINGS

Exemplary embodiment(s) of the present invention will be described in detail based on the following figures, wherein:
Fig. 1 is a diagram showing a system configuration of a fax sorting system according to an exemplary embodiment of the present disclosure;
Fig. 2 is a block diagram showing a hardware configuration of an image forming apparatus in the fax sorting system;
Fig. 3 is a diagram for describing a flow of processing in a case of fax reception in the fax sorting system;
Fig. 4 is a diagram for describing a flow of the processing in a case of the fax reception in the fax sorting system;
Fig. 5 is a diagram for describing a flow of the processing in a case of the fax reception in the fax sorting system; and
Fig. 6 is a diagram for describing a flow of processing in a case of fax reception in the image forming apparatus.

### DETAILED DESCRIPTION OF THE INVENTION

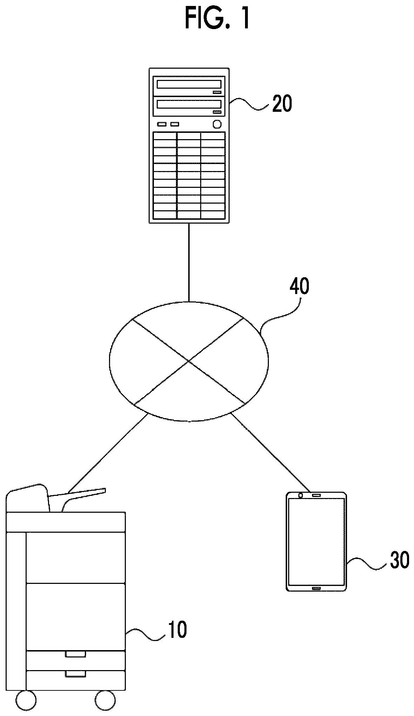

Hereinafter, an exemplary embodiment for embodying the technique of the present disclosure will be described in detail with reference to the drawings. Fig. 1 is a diagram showing a system configuration of a fax sorting system according to an exemplary embodiment.

As shown in Fig. 1, the fax sorting system according to the present exemplary embodiment is configured with an image forming apparatus 10, a cloud server 20, and a user terminal 30.

The image forming apparatus 10 is a so-called multifunctional apparatus including a plurality of functions such as a copy function, a print function, a fax function, and a scan function. The image forming apparatus 10 is an example of an information processing system in the technology of the present disclosure.

The cloud server 20 is a server for storing and managing fax data received from the image forming apparatus 10. The cloud server 20 is an example of an external device in the technology of the present disclosure. The cloud server 20 is connected to the image forming apparatus 10 via an Internet 40.

The user terminal 30 is a terminal for checking the fax data stored in the cloud server 20. As the user terminal 30, for example, a smartphone, a personal computer, or the like can be used. The user terminal 30 is connected to the cloud server 20 via the Internet 40.

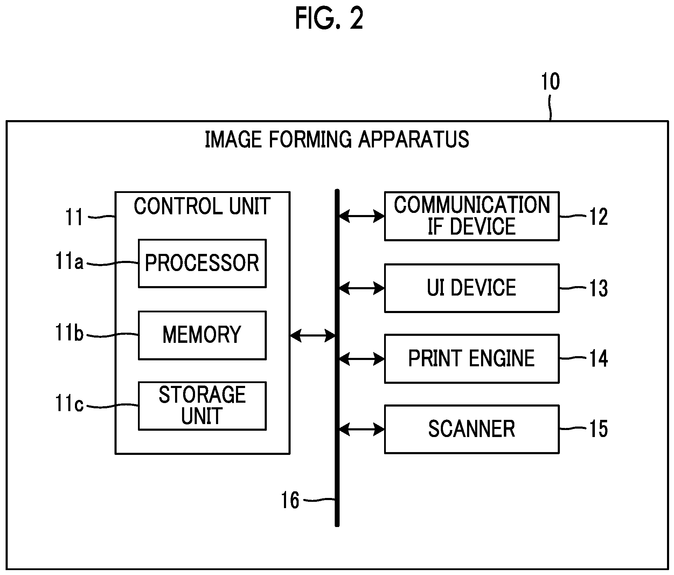

Next, a hardware configuration of the image forming apparatus 10 according to the present exemplary embodiment will be described. Fig. 2 is a block diagram showing a hardware configuration of the image forming apparatus 10.

As shown in Fig. 2, the image forming apparatus 10 includes a control unit 11, a communication interface (abbreviated as IF) device 12, a user interface (abbreviated as UI) device 13, a print engine 14, and a scanner 15. The components are connected to each other via a control bus 16.

The control unit 11 includes a processor 11a, a memory 11b, and a storage unit 11c. The processor 11a executes predetermined processing based on a program read out from the storage unit 11c and developed in the memory 11b. The storage unit 11c is configured with, for example, a ROM, an HDD, or an SSD. Various programs, data, and the like are stored in the storage unit 11c.

In the present exemplary embodiment, the processor 11a is described as a processor that reads out and executes the program stored in the storage unit 11c, but the present disclosure is not limited thereto. The program may be provided in a form recorded on a recording medium readable by a computer as described above. In addition, the program may be acquired from an external device via a communication line.

The communication IF device 12 transmits and receives data to and from an external device or the like. The UI device 13 is, for example, a device for the user to receive or input information, such as a touch panel and/or a button. The print engine 14 prints an image on a recording medium such as printing paper through steps such as charging, exposure, development, transfer, and fixing. The print engine 14 is an example of a printing apparatus in the technology of the present disclosure. The scanner 15 scans a document loaded in the image forming apparatus 10 as image data.

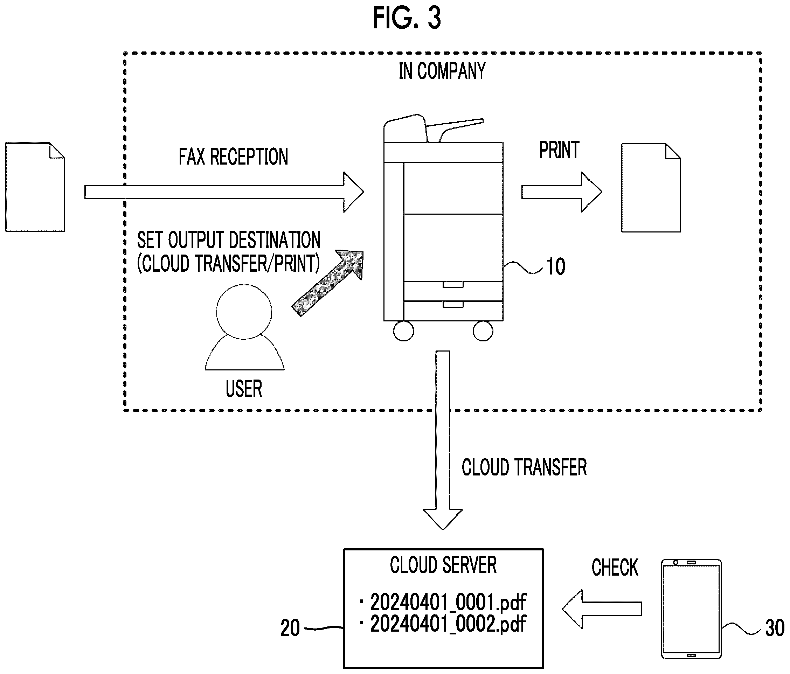

As shown in Fig. 3, in the fax sorting system according to the present exemplary embodiment, regarding the output destination of the fax data received by the image forming apparatus 10, the user sets in advance whether to print the data or upload the data to the cloud server 20. Here, the setting of the output destination of the fax data is performed via the user interface device 13 of a main body of the image forming apparatus 10.

Here, regarding a method of designating the cloud server 20 as the output destination of the fax data, in a case where the cloud server 20 is operating as a hypertext transfer protocol (HTTP) server, a method of designating by using a uniform resource locator (URL) need only be used as the method of designating the output destination.

In a case of outputting the received fax data to the cloud server 20, the image forming apparatus 10 accesses a URL designated as the output destination via an HTTP protocol and transmits the fax data as a file in a case where the access is possible.

The cloud server 20 may be a server corresponding to a file transfer protocol (FTP) server or another general file transfer protocol, in addition to the HTTP server.

In a case where the image forming apparatus 10 receives fax data, the control unit 11 of the image forming apparatus 10 prints the fax data or uploads the fax data to the cloud server 20 in accordance with the setting of the output destination of the fax data.

With the configuration as above, for example, in a case where the user is in the company where the image forming apparatus 10 is installed, the fax data can be printed and checked. In addition, in a case where the user is outside the company, the fax data can be checked by accessing the cloud server 20 from the user terminal 30.

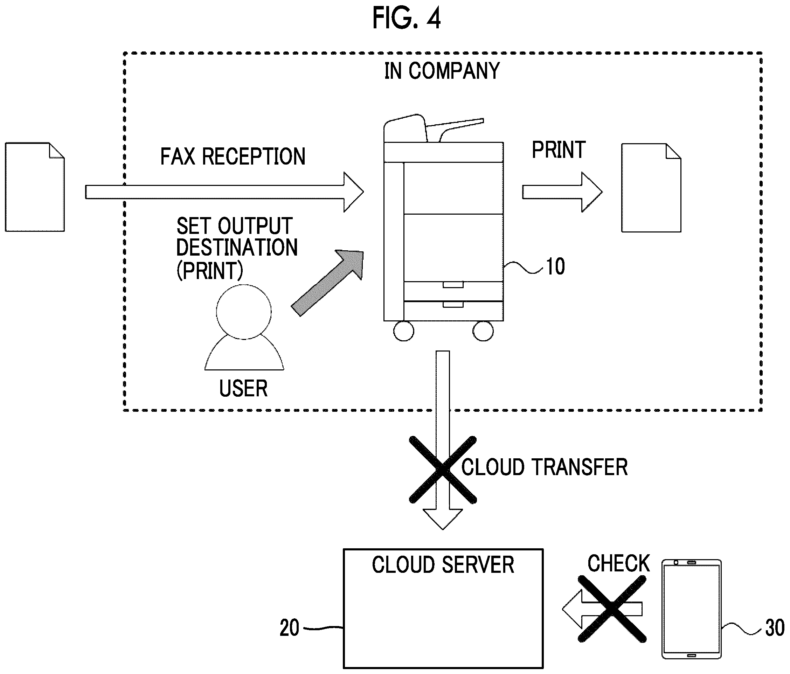

However, as shown in Fig. 4, in a case where the user goes out in a state where the received fax data is set to be printed, the user cannot check the content of the fax from the outside of the company via the cloud. There is a problem in security in that access from the outside of the company to the image forming apparatus installed in the company is received and the setting of the image forming apparatus can be remotely changed from the outside of the company.

In order to address such a problem, in a case where instruction information for providing an instruction to set the output destination of the received fax data to any one of printing using the image forming apparatus 10 (specifically, the print engine 14) or upload to the cloud server 20 (that is, cloud transfer) is registered in the cloud server 20, the control unit 11 in the image forming apparatus 10 sets the output destination of the fax data received from the outside according to the instruction provided by the instruction information.

In the fax sorting system according to the present exemplary embodiment, the instruction information is uploaded to the cloud server 20 as information in a file format.

An instruction file, which is a file of the instruction information, can be, for example, a text file such as "instruction file.txt". In addition, regarding a method of describing the instruction, the instruction need only be described in a specific description language that can be recognized by the image forming apparatus 10.

For example, in a case where the output destination of the data is subject to cloud transfer, it is described as "Action: ChangeExecuteMode to CloudTransfer" or the like. In addition, in a case where the output destination of the data is printed, it is described as "Action: ChangeExecuteMode to print" or the like.

The file format of the instruction information is not limited to the above, and any file format may be used. In addition, the method of describing the instruction is not limited to the above, and any description method may be used.

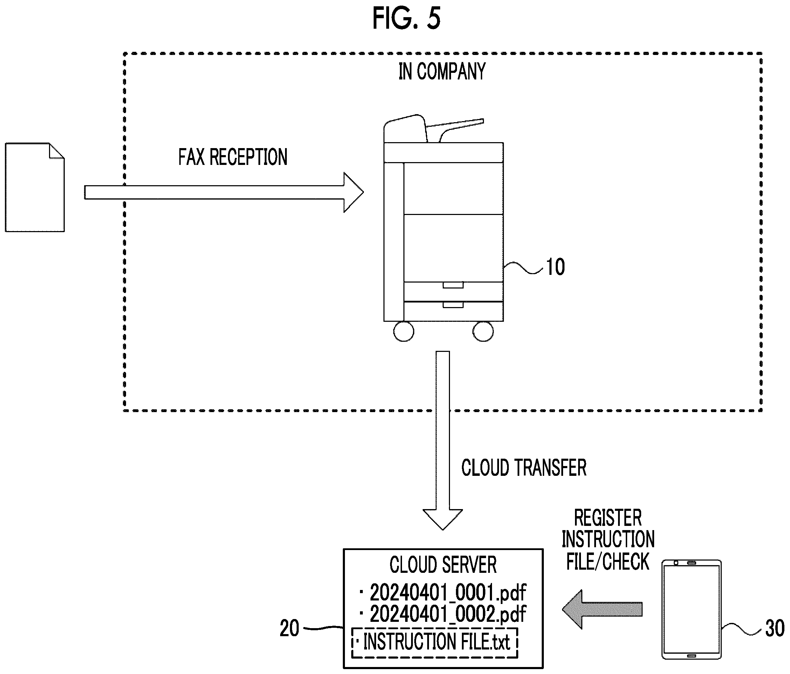

As shown in Fig. 5, in the fax sorting system according to the present exemplary embodiment, the user can change the output destination of the fax data even from the outside of the company by uploading and registering the instruction file to the cloud server 20 using the user terminal 30 or the like.

In addition, in a case where the fax data is received, the control unit 11 checks whether or not the instruction information is registered in the cloud server 20 before outputting the fax data. Specifically, the control unit 11 accesses information on a location of the cloud server 20 designated as the output destination of the fax data, for example, a location designated by a URL, and acquires list information on file names of files stored at the location. As a result, it is possible to check the information on the file stored in the cloud server 20.

As a result of the check, in a case where the instruction information is registered in the cloud server 20, the control unit 11 outputs the fax data to the output destination indicated by the instruction information. That is, in a case where "instruction file.txt" is present in a list of the file names of the files stored in the accessed location, the control unit 11 acquires the "instruction file.txt" file. Then, the control unit 11 refers to the instruction information described in the acquired "instruction file.txt", and changes a mode to a mode in which the fax data is output to the output destination indicated by the instruction information, for example, in a case where the instruction information is described as "Action:ChangeExecuteMode to CloudTransfer". In addition, in a case where the instruction information is not registered in the cloud server 20, the control unit 11 outputs the fax data to the output destination set in advance in the image forming apparatus 10.

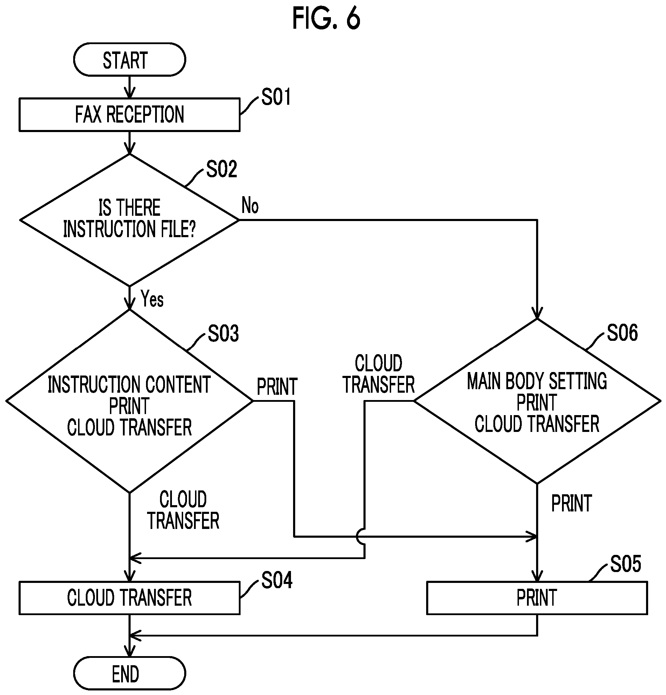

Next, a flow of processing in a case of fax reception in the image forming apparatus 10 will be described with reference to a flowchart of Fig. 6.

First, in step S01, the control unit 11 of the image forming apparatus 10 receives the fax data.

Next, in step S02, the control unit 11 determines whether or not the instruction file is registered in the cloud server 20.

In a case where it is determined in step S02 that the instruction file is registered in the cloud server 20, the control unit 11 determines in step S03 whether the instruction content of the instruction file is printing using the image forming apparatus 10 or cloud transfer.

In step S03, in a case where it is determined that the instruction content of the instruction file is the cloud transfer, the control unit 11 uploads the fax data received in step S01 to the cloud server 20 in step S04, and ends the processing.

In step S03, in a case where it is determined that the instruction content of the instruction file is the printing using the image forming apparatus 10, the control unit 11 prints the fax data received in step S01 in step S05, and ends the processing.

In addition, in a case where it is determined in step S02 that the instruction file is not registered in the cloud server 20, the control unit 11 determines whether the setting content set in the main body of the image forming apparatus 10 is the printing using the image forming apparatus 10 or the cloud transfer in step S06.

In step S06, in a case where it is determined that the setting content set in the main body of the image forming apparatus 10 is the cloud transfer, the control unit 11 uploads the fax data received in step S01 to the cloud server 20 in step S04, and ends the processing.

In step S06, in a case where it is determined that the setting content set in the main body of the image forming apparatus 10 is the printing using the image forming apparatus 10, the control unit 11 prints the fax data received in step S01 in step S05, and ends the processing.

### [Modification Examples]

Although the fax sorting system according to an exemplary embodiment of the present disclosure has been described above, the technology of the present disclosure is not limited to the above exemplary embodiment and can be appropriately changed.

For example, the data which is received by the image forming apparatus 10 and of which the output destination is sorted is not limited to fax data, and may be any data such as mail data.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, in the technology of the present disclosure, the system includes both a system configured with a plurality of devices and a system configured with a single device.

In addition, the technology of the present disclosure can also be applied to a program and a program product.

### [Supplementary Notes]

Regarding the exemplary embodiments described above, the following supplementary notes are further disclosed.

### (((1)))

An information processing system comprising:
a processor configured to:
set, in a case where instruction information for providing an instruction to set an output destination of received data to any one of printing using a printing apparatus or upload to an external device is registered in the external device, the output destination of the data received from an outside according to the instruction provided by the instruction information.

### (((2)))

The information processing system according to (((1))), wherein the processor is configured to:
check whether or not the instruction information is registered in the external device before outputting the data in a case where the data is received; and
output the data to the output destination indicated by the instruction information in a case where the instruction information is registered in the external device.

### (((3)))

The information processing system according to (((2))), wherein the processor is configured to:
check whether or not the instruction information is registered in the external device before outputting the data in a case where the data is received; and
output the data to an output destination set in advance in a case where the instruction information is not registered in the external device.

### (((4)))

The information processing system according to any one of (((1))) to (((3))), wherein the external device is a cloud server.

### (((5)))

The information processing system according to (((4))), wherein the instruction information is uploaded to the cloud server as information in a file format.

### (((6)))

A program that causes a computer to execute a step of:
setting, in a case where instruction information for providing an instruction to set an output destination of received data to any one of printing using a printing apparatus or upload to an external device is registered in the external device, the output destination of the data received from an outside according to the instruction provided by the instruction information.

The effects of the configuration of the supplementary note will be described below.

With the information processing system according to (((1))), it is possible to remotely change the output destination of the received data.

With the information processing system according to (((2))), it is possible to reflect the user's desired output destination immediately before the output, on the output destination of the data.

With the information processing system according to (((3))), it is possible to output the data even in a case where there is no instruction regarding the output destination of the data from the user immediately before the output of the data.

With the information processing system according to (((4))), it is possible to remotely change the output destination of the received data using the cloud server.

With the information processing system according to (((5))), it is possible to remotely change the output destination of the data by uploading a file to the cloud server.

With the program according to (((6))), it is possible to remotely change the output destination of the received data.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
11: control unit
11a: processor
11b: memory
11c: storage unit
12: communication interface device
13: user interface device
14: print engine
15: scanner
16: control bus
20: cloud server
30: user terminal
40: Internet

## Claims

1. An information processing system comprising:
a processor configured to:
set, in a case where instruction information for providing an instruction to set an output destination of received data to any one of printing using a printing apparatus or upload to an external device is registered in the external device, the output destination of the data received from an outside according to the instruction provided by the instruction information.

2. The information processing system according to claim 1, wherein the processor is configured to:
check whether or not the instruction information is registered in the external device before outputting the data in a case where the data is received; and
output the data to the output destination indicated by the instruction information in a case where the instruction information is registered in the external device.

3. The information processing system according to claim 2, wherein the processor is configured to:
check whether or not the instruction information is registered in the external device before outputting the data in a case where the data is received; and
output the data to an output destination set in advance in a case where the instruction information is not registered in the external device.

4. The information processing system according to any one of claims 1 to 3,
wherein the external device is a cloud server.

5. The information processing system according to claim 4,
wherein the instruction information is uploaded to the cloud server as information in a file format.

6. A program that causes a computer to execute a step of:
setting, in a case where instruction information for providing an instruction to set an output destination of received data to any one of printing using a printing apparatus or upload to an external device is registered in the external device, the output destination of the data received from an outside according to the instruction provided by the instruction information.

7. An information processing method comprising:
setting, in a case where instruction information for providing an instruction to set an output destination of received data to any one of printing using a printing apparatus or upload to an external device is registered in the external device, the output destination of the data received from an outside according to the instruction provided by the instruction information.
